# EUROPEAN PATENT APPLICATION

(11) **EP 3 131 039 A1**
(43) Date of publication of application: **15.02.2017**
(21) Application number: 15777567.7
(22) Date of filing: 12.02.2015
(51) Int. Cl.: G06Q 10/00, G01R 21/00, G06Q 50/10

(54) **BEHAVIOR PREDICTION DEVICE AND PROGRAM**

(30) Priority: 07.04.2014 JP 2014078489
(71) Applicant: Panasonic Intellectual Property Management Co., Ltd., Osaka-shi, Osaka 540-6207 (JP)
(72) Inventor: SHIMIZU, Noriyoshi, Osaka-shi, Osaka 540-6207 (JP); NISHIYAMA, Takashi, Osaka-shi, Osaka 540-6207 (JP); MUKOYAMA, Fumiyoshi, Osaka-shi, Osaka 540-6207 (JP); NAKAHARA, Tomoharu, Osaka-shi, Osaka 540-6207 (JP)
(74) Representative: Appelt, Christian W.
(86) International application number: PCT/JP2015/000647
(87) International publication number: WO 2015/155916

(57) **Abstract**

In order to predict user's behavior based on a power consumption value measured per branch circuit, a behavior prediction device (10) includes an acquisition interface (11) for acquiring a power consumption value by an electric load (24) for each of branch circuits (22) divided inside a distribution board (21) in an object space (a dwelling (20)), and a predictor (12) for working out a stop time based on power information in which the power consumption value is related with date and time at which the power consumption value is acquired. The stop time is a time at which the power consumption value will fall to a predetermined reference value. Based on the stop time, the predictor (12) predicts a kind of specified behavior of a user in the object space and a time at which the behavior will occur.

## Description

### Technical Field

The invention relates generally to behavior prediction devices and programs and, more particularly, to a behavior prediction device configure to predict user's behavior based on a power consumption value measured per branch circuit and a program for allowing a computer to function as the behavior prediction device.

### Background Art

In a related technology it has been proposed to measure energy consumption by load apparatuses used in a dwelling to predict dweller's life behavior within an energy consumption period based on a measurement result of the energy consumption (see, e.g. Document 1 (JP 2012-174030 A)). The technology described in Document 1 measures respective electric energy consumption consumed by a main circuit and branch circuits to estimate whether a user (a dweller) is staying home, going out or sleeping based on the measured respective electric energy consumption.

The configuration described in Document 1 just estimates dweller's life behavior at a point in time when the electric energy consumption is measured because the dweller's life behavior is just estimated based on the measured respective electric energy consumption. That is, it is not intended to predict in advance whether or not specified life behavior will occur.

### Summary of Invention

It is an object of the present invention to provide a behavior prediction device configured to predict user's behavior in advance based on a power consumption value measured per branch circuit. It is further an object of the present invention to provide a program for allowing a computer to function as the behavior prediction device.

A behavior prediction device according to an aspect of the invention includes: an acquisition interface configured to acquire a power consumption value for each of a plurality of branch circuits which are divided inside a distribution board in an object space and each of which is configured to be connected with an electric load; and a predictor configured to acquire a first stop time based on power information in which the power consumption value is related with date and time at which the power consumption value is acquired. The first stop time is a time at which the power consumption value will fall to a predetermined reference value. The predictor is also configured, based on the first stop time, to predict a kind of specified behavior of a user in the object space and a time at which the behavior will occur. The predictor is configured to apply the first stop time to a model, thereby predicting the kind of behavior and the time at which the behavior will occur. The first stop time is acquired from the power information of at least one branch circuit used for conditions of the model. The model contains the conditions which include a second stop time acquired from at least one branch circuit of the plurality of branch circuits, and is set so as to predict the kind of behavior and the time at which the behavior will occur.

A program according to another aspect of the present invention allows a computer to function as the abovementioned behavior prediction device.

A storage medium storing the program may be a computer-readable storage medium.

The present invention has the advantage of being capable of predicting user's behavior in advance based on a power consumption value measured per branch circuit.

### Brief Description of Drawings

FIG. 1 is a block diagram of an example in an embodiment;
FIG. 2 illustrates an operational example in the embodiment;
FIG. 3 illustrates an operational example in the embodiment;
FIG. 4 illustrates an operational example in the embodiment;
FIG. 5 is a block diagram of another example in the embodiment;
FIG. 6 illustrates an operational example in the embodiment;
FIG. 7 illustrates an example of information presented by the embodiment; and
FIG. 8 illustrates an example of information presented by the embodiment.

### Description of Embodiments

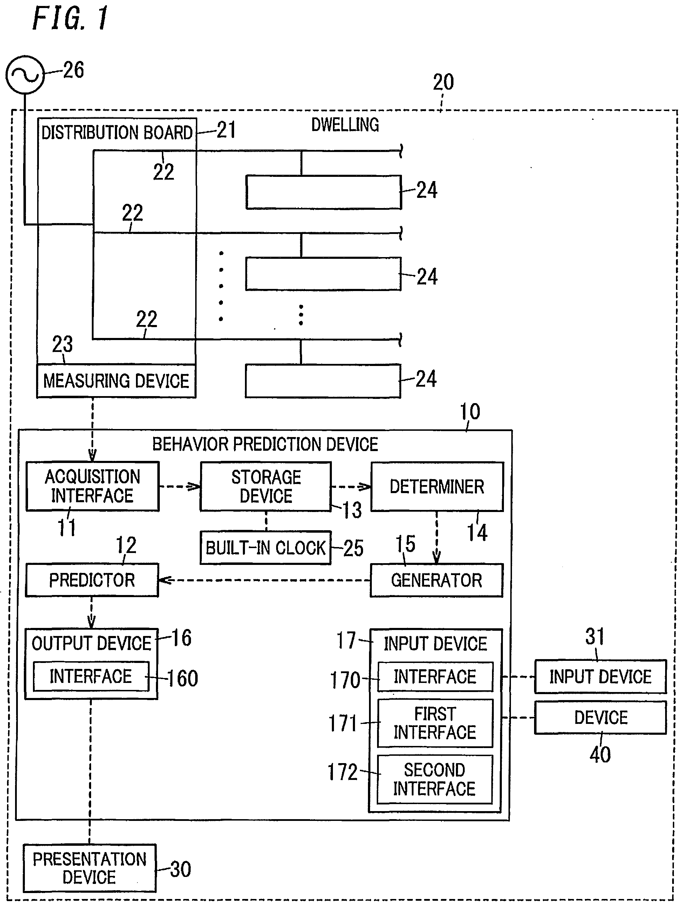

As shown in FIG. 1, a behavior prediction device 10 to be described below includes an acquisition interface 11 and a predictor 12. The acquisition interface 11 is configured to acquire, from a measuring device 23, a power consumption value for each of a plurality of branch circuits 22 which are divided inside a distribution board 21 in an object space (a dwelling 20) and each of which is configured to be connected with an electric load(s) 24. The predictor 12 is configured to acquire a first stop time based on power information in which the power consumption value is related with date and time at which the power consumption value is acquired. The first stop time is a time at which the power consumption value will fall to a predetermined reference value. The predictor 12 is further configured, based on the first stop time, to predict the kind of specified behavior of a user in the object space and a time at which the behavior will occur.

Desirably, the predictor 12 applies the first stop time acquired from the power information to a model, thereby predicting the kind of behavior and the time at which the behavior will occur. The model contains conditions which include a second stop time acquired from at least one branch circuit 22, and is set so as to predict the kind of behavior and the time at which the behavior will occur. The first stop time to be applied to the model is acquired from power information on at least one branch circuit used for the conditions of the model. Desirably, the conditions of the model include the order of second stop times acquired from two or more branch circuits 22 selected from the plurality of branch circuits 22.

Desirably, the behavior prediction device 10 also includes a storage device 13, a determiner 14 and a generator 15 (a model generator). The storage device 13 is configured to store the power information. The determiner 14 is configured to acquire a second stop time per branch circuit 22 based on the power information stored in the storage device 13. The generator 15 is configured to evaluate the presence of regularity between second stop times acquired through the determiner 14 and user's behavior. The generator 15 is further configured to generate the model when the regularity is detected. The model contains the conditions which include a second stop time acquired from a corresponding branch circuit 22, and is set so as to find out a kind of behavior and a time at which the behavior will occur. In this case, the behavior prediction device 10 desirably includes an input device 17 configured to receive an input for designating a branch circuit 22 to be included in the conditions of the model.

Desirably, the abovementioned reference value is set based on a stand-by power consumption value acquired per branch circuit 22 from power information stored in the storage device 13.

The behavior prediction device 10 may include an output device 16 configured to present information associated with the behavior based on a kind of behavior and a time at which the behavior will occur, which are predicted through the predictor 12.

The conditions of the model may include consumption information on consumption of at least one of gas and water used in the object space (the dwelling 20).

A behavior prediction device 10 in the present embodiment will be hereinafter explained in detail. In the example below, an object space is a dwelling 20, but may be a store, an office, an educational facility (a school or a cram school) or the like.

As shown in FIG. 1, a distribution board 21 is installed in the dwelling 20 that is the object space. The distribution board 21 is configured to distribute (electric) power received from a power supply 26 such as a utility grid to a plurality of branch circuits 22. Each of the plurality of branch circuits 22 allows an electric load(s) 24 in the dwelling 20 to be connected to. A measuring device 23 is configured to measure power (power consumption) by electric loads 24 per branch circuit 22.

The behavior prediction device 10 in the embodiment is basically configured, based on power consumption values measured with the measuring device 23, to predict a time at which known behavior will be done. Specifically, the embodiment provides a technology for discovering the presence of regularity between a change over time in power consumption values and the known behavior, and a technology for predicting a time at which the known behavior will be done, from the change over time in power consumption values based on the detected regularity. In the embodiment to be explained below, since power consumption values in the dwelling 20 are utilized, a user is a dweller of the dwelling 20.

Power to be supplied to the distribution board 21 may include power from a dispersed power system such as photovoltaic systems, electrical storage devices and fuel cells besides the utility grid provided by a public utility (a commercial power supply). Note that the behavior prediction device 10 is configured to operate based on power consumption values repeatedly measured with the measuring device 23, regardless of the kind of power supply for supplying power to a side of the distribution board 21.

The measuring device 23 may be configured to be disposed inside or outside the distribution board 21. Each branch circuit 22 may correspond to one or more electric loads 24. For example, each of one or more branch circuits 22 may be connected with an electric load 24 with comparatively large power consumption, such as an air conditioner, an IH (Induction Heating) cooking heater or a microwave oven. In case each of one or more branch circuits 22 is connected with two or more electric loads 24, such a branch circuit 22 is often assigned a room in the dwelling 20 as a unit. In the embodiment, just two cases will be explained for the sake of simplicity, - a case where each of one or more branch circuits 22 is connected with one electric load 24 and another case where each of one or more branch circuits 22 corresponds to a room in the dwelling 20.

The measuring device 23 is configured to monitor a current (electric current) flowing through each branch circuit 22 through a Rogowski coil or a clamp current sensor to calculate a power consumption value by multiplying the monitored current by a line voltage of a corresponding branch circuit 22. That is, each power consumption value measured with the measuring device 23 is not an actual instantaneous value but electric energy per unit time. The unit time is selected from a range of about one second to ten minutes, and desirably selected from thirty seconds or one minute. The unit time may be also about one second.

Instantaneous power per branch circuit 22 varies over time even within the unit time, but in the embodiment each power consumption value is electric energy integrated per unit time without considering variation in instantaneous power within the unit time. By dividing each power consumption value by the unit time, a mean value of corresponding power consumption per unit time can be acquired.

Variation in each power consumption value can be monitored more in detail by using shorter unit time. There is however a possibility that variation in power received via the distribution board 21 or variation in power consumption value with each operation of the electric loads 24 is confused with variation in power consumption value with user's behavior. The unit time is therefore set so as to make it possible to discover the presence of regularity between variation over time in each power consumption value and user's behavior and to reduce the influence of variation in power consumption values that are unrelated to the user's behavior.

The behavior prediction device 10 has main hardware including a computer configured to execute a program, thereby realizing functions below. In other words, the embodiment provides the program that allows the computer to function as the behavior prediction device 10 to be explained later. This sort of computer may be not only a personal computer but also a portable device such as a smartphone or a tablet. The computer may integrally include a processor and a memory like a microcomputer (a microcontroller).

When the computer of the behavior prediction device 10 is selected from a personal computer, a smartphone, a tablet or the like, a relay is required in order to receive power consumption values by communication with the measuring device 23. Desirably, this sort of relay is a HEMS (Home Energy Management System) controller, but may be formed of a wireless LAN access point.

The HEMS controller is configured to receive power consumption values from the measuring device 23 to allow an appropriate presentation device 30 to present the power consumption values, thereby visualizing the power consumption values. The HEMS controller can also communicate with (a) specified electric loads 24 with a communication function, thereby monitoring the operations of the electric loads 24 and instructing the operations of the electric loads 24. The HEMS controller also includes a computer (a microcomputer), and therefore the behavior prediction device 10 can be realized as a function of part of the HEMS controller.

The behavior prediction device 10 may be composed of a server and clients (devices) that are configured to perform communication through a telecommunications network such as the Internet. In this case, each client may be configured to provide the server with the power consumption values acquired from the measuring device 23 to give the server an instruction to discover the presence of regularity. When the server detects information on the regularity (rule), the system may be configured so that the server transmits the information on the rule to a corresponding client and the corresponding client predicts user's behavior.

That is, there are various options for realizing the present embodiment, and tasks of the behavior prediction device 10 may be carried out by appropriate devices in accordance with processing capacity of CPU (Central Processing Unit), hardware resources such as memory capacity, or utility form.

The program may be stored in a ROM (Read Only Memory) in advance, or provided via the telecommunications network such as the Internet. Alternatively, the program may be provided by a computer readable storage device.

A configuration and an operation of the behavior prediction device 10 will be hereinafter explained. In the explanation below, the behavior prediction device 10 is realized as one function of the HEMS controller. The behavior prediction device 10 shown in FIG. 1 includes an acquisition interface 11, a predictor 12, a storage device 13, a determiner 14, a generator 15 and an output device 16. The behavior prediction device 10 further includes a built-in clock 25.

The acquisition interface 11 is configured to acquire a power consumption value for each of the plurality of branch circuits 22 from the measuring device 23. The acquisition interface 11 doubles as an interface that allows the measuring device 23 to be connected with. As stated above, the measuring device 23 calculates power consumption values per unit time, and therefore the acquisition interface 11 is to acquire the power consumption values from the plurality of branch circuits 22 per unit time. However, the function for calculating the power consumption values per unit time in the measuring device 23 may be included in the acquisition interface 11.

The storage device 13 is configured to store power information including power consumption values and date and time, in which each power consumption value acquired from through the acquisition interface 11 from the measuring device 23 is related to date and time. That is, the power information includes, per unit time, power consumption values and date and time at which the power consumption values are measured. The date and time are measured with the built-in clock 25. For example, the built-in clock 25 is a real time clock provided in the behavior prediction device 10.

The power information stored in the storage device 13 includes information per branch circuit 22. That is, the storage device 13 is configured to store a history of transition about power consumption values per branch circuit 22. The storage device 13 has memory capacity for storing power information for a period of time selected from one week, one month, six months, one year, two years or the like. A longer period of time of the power information stored in the storage device 13 requires a larger amount of information. In this case, it is considered that a model with high prediction accuracy can be generated. Collection of power information for a long period of time causes a delay in the start of the usage and raises a concern about variation in the model with a change in a user's life habit. It is therefore desirable that the behavior prediction device 10 be configured to generate two or more models based on power information for a comparatively short period of time to modify any of the models if necessary. Note that the behavior prediction device 10 may be configured to generate at least one model.

The embodiment is configured based on prediction that the presence of regularity may be discovered between respective usage of the electric loads 24 in the dwelling 20 and specified behavior of a user (a dweller) in the dwelling 20. The user's specified behavior may have regularity to a certain degree with respect to the usage of a single electric load 24, but can have obvious regularity with respect to the order of two or more used electric loads 24.

In the embodiment, "going out" and "sleeping" are considered as user's specified behavior because many users make a habit of turning off almost all electric loads 24 before "going out" or "sleeping". For example, many electric loads 24 such as light fittings, an IH cooking heater(s), an air conditioner(s), and a television set(s) are turned off before "going out" in general. Similarly, electric loads 24 such as light fittings, an IH cooking heater(s), and a television set(s) are usually turned off before "sleeping"

In view of the knowledge, the behavior prediction device 10 is configured, based on information per branch circuit 22 in the power information, to acquire times (hereinafter referred to as "stop times") at which respective electric loads 24 have been stopped. The behavior prediction device 10 is also configured, based on the conditions which the stop times are included in, to predict a kind of specified behavior and a time at which the behavior will occur. The acquisition interface 11 acquires the stop times based on power consumption values from the measuring device 23. The predictor 12 checks the acquired stop times with each model generated by the generator 15, and if there is a model that matches therewith, predicts a kind of specified behavior and a time at which the behavior will occur, based on the model.

Conditions of each model include stop times acquired from branch circuits 22 selected according to a kind of behavior. Each model is set so as to predict a kind of a corresponding behavior and a time at which the behavior will occur, based on the conditions which include the stop times acquired from the selected branch circuits 22. In case of a single branch circuit 22, when a period of time in which a stop time has been detected is considered, the estimation accuracy of a kind of behavior becomes high. However, each model to be explained below includes stop times acquired from branch circuits 22. In addition, each model to be explained below contains conditions which include the occurrence order of the stop times and is set so as to find out a kind of behavior and a time at which the behavior will occur.

Each model described above is generated based on past power information stored in the storage device 13. As stated below, the storage device 13 also stores kinds of pieces of specified behavior in the past and respective times at which the pieces of specified behavior will occur. The determiner 14 is configured to acquire a stop time per branch circuit 22 based on the power information stored in the storage device 13. The generator 15 is configured, based on stop times acquired from branch circuits 22 through the determiner 14 and a time at which specified behavior occurred, to evaluate the presence of regularity between the specified behavior and the stop times acquired from the branch circuits 22.

In the embodiment, since the specified behavior is "going out" or "sleeping", the generator 15 evaluates the presence of regularity between the "going out" or the "sleeping" and the stop times acquired from the branch circuits 22. Behavior of "going out" or "sleeping" has regularity to be found out, which will occur following respective deactivation of specified branch circuits 22. The respective deactivation of branch circuits 22 may therefore be detected based on power consumption values acquired by focusing on power consumption values by the specified branch circuits 22 in order to predict behavior of "going out" or "sleeping".

In order to acquire stop times, the determiner 14 is configured, based on the power information stored in the storage device 13, to define a reference value for judging whether an electric load(s) per branch circuit 22 is(are) in operation or not. The reference value can be appropriately defined based on specialist's or expert's experience, but is desirably defined automatically. In order to define the reference value automatically, the determiner 14 may calculate a stand-by power consumption value per branch circuit 22 to set the reference value based on the stand-by power consumption values. The reference value may be acquired from the stand-by power consumption values, but may be a value obtained by adding a stand-by power consumption value to a prescribed value or by subtracting a prescribed value from a stand-by power consumption value.

The determiner 14 is configured to compare a power consumption value per branch circuit 22 with the reference value to detect, as a stop time, a time at which the power consumption value falls to the reference value. That is, it is judged that a period of time in which each power consumption value exceeds the reference value is a period of time in which an electric load(s) 24 connected to a corresponding branch circuit 22 is(are) in operation, and that a period of time in which each power consumption value is equal to or less than the reference value is a period of time in which the electric load(s) 24 connected to the corresponding branch circuit 22 is(are) out of operation.

A stand-by power consumption value per branch circuit 22 is calculated based on variation in power consumption values per branch circuit 22 for a prescribed period of time such as one day. Specifically, the stand-by power consumption value may be obtained from a minimum value of a comparison value satisfying a condition that a duration in which the power consumption values are less than the comparison value is equal to or more than a reference time, while gradually decreasing the comparison value to be compared with the power consumption values. The stand-by power consumption value may be calculated by another method. For example, it may be obtained from a minimum value of a comparison value satisfying a condition that a period of time in which power consumption values for one day are less than the comparison value is equal to or more than a reference time, while gradually increasing the comparison value. In this case, the reference time is determined according to a use frequency or period of time of the electric load(s) 24. That is, the reference time is set according to a time in which a corresponding electric load(s) 24 is(are) out of operation.

The determiner 14 is configured, after calculating a stand-by power consumption value of a target branch circuit 22, to set a reference value based on the stand-by power consumption value. After setting the reference value, the determiner 14 may acquire, as a stope time, a time at which a power consumption value acquired from a corresponding branch circuit 22 falls to the reference value. Thus, the determiner acquires a stop time per branch circuit 22.

Here, the time at which the power consumption value falls to the reference value needs satisfying a condition that after the time, a period of time in which each following power consumption value is equal to or less than the reference value continuously exceeds a prescribed judgment time. For example, when a following power consumption value exceeds the reference value before the judgment time elapses from a point in time at which the power consumption value falls to the reference value, the time at which the power consumption value falls to the reference value is not employed as the stop time. In case the determiner 14 calculate a stop time per branch circuits 22 daily, two or more stop times may be acquired from one branch circuit 22 a day.

The generator 15 is configured to receive a stop time(s) acquired per branch circuit 22 through the determiner 14. The generator 15 is configured to evaluate the presence of regularity between a stope time acquired per branch circuit 22 and user's behavior stored in the storage device 13. When detecting the regularity, the generator 15 may predict corresponding behavior based on the conditions including the stop time. A model (i.e., a rule) generated through the generator 15 contains conditions for predicting a kind of user's behavior and a time at which the behavior will occur, where the stop times acquired from branch circuits 22 selected for predicting the behavior are included in the conditions. That is, the model relates the stop times acquired from the selected branch circuits 22 as a condition with a prediction time until which the user's specified behavior will occur. As stated above, the model generated through the generator 15 also includes the occurrence order of stop times acquired from branch circuits 22 (two or more branch circuits 22).

As stated above, the model contains the conditions for predicting a kind of user's behavior and a time at which the behavior will occur where selected branch circuits 22 (two or more branch circuits 22), stop times acquired from the branch circuits 22 and the occurrence order of the stop times are included in the conditions. Note that the model may include power consumption values acquired from the selected branch circuits 22 before the stop times, and the like.

The kind of user's behavior and the time at which the behavior will occur are predicted based on the stop times acquired from the selected branch circuits 22, and therefore the behavior will not necessarily occur. It is considered that the reliability of prediction would more fall as it takes a longer time from a point in time at which the stop times are detected from the branch circuits 22 to a predicted point in time at which the behavior will occur. Therefore, in the embodiment, probability representing the reliability or certainty factor of prediction is given to a stop time per branch circuit 22 included in the conditions of the model. A larger value is assigned to the probability as the prediction time from the stop time to the behavior becomes shorter. A larger value is also assigned thereto as the order thereof becomes later.

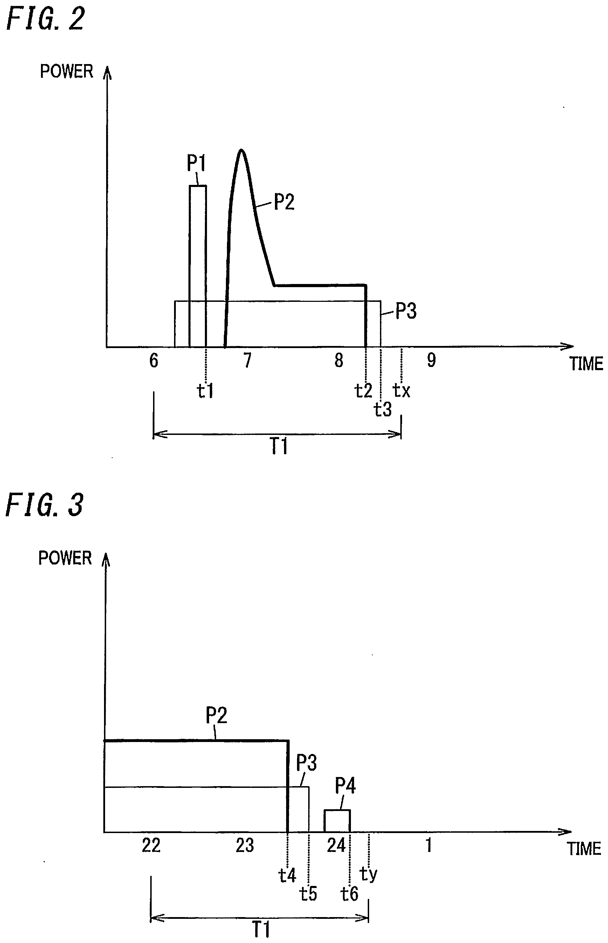

Hereinafter, a specific example for generating a model based on power information will be explained. In this example, power consumption values acquired from selected branch circuits 22 vary over time as shown in FIGS. 2 and 3. The power information stored in the storage device 13 includes power consumption values with complicated variation. However, each of the example of FIGS. 2 and 3 illustrates the transition of the power consumption values schematically for the sake of simplicity.

As stated above, in the embodiment, "going out" and "sleeping" are predicted as specified behavior. FIG. 2 shows the regularity which is found out between "going out" and stop times acquired from three branch circuits 22 corresponding to an IH cooking heater, an air conditioner for a living room, and electric loads in the living room (all electric loads exclusive of the air conditioner). Hereinafter, the "electric loads in the living room" are simply referred to as "LIVING". FIG. 3 shows the regularity which is found out between "sleeping" and stop times acquired from three branch circuits 22 corresponding to the air conditioner for the living room, LIVING and a bedroom. In the explanation below, a name of a corresponding electric load 24 or room is employed as a name per branch circuit 22.

In FIG. 2, Reference sign P1 represents power consumption values by the IH cooking heater, Reference sign P2 represents power consumption values by the air conditioner for the living room, and Reference sign P3 represents power consumption values by LIVING. In the example of FIG. 2, the stop time t1 of the IH cooking heater is 6:40, the stop time t2 of the air conditioner for the living room is 8:20, and the stop time t3 of LIVING is 8:30. The time of "going out" Tx is 8:35.

In Fig. 3, Reference sign P4 represents power consumption values in the bedroom. Like FIG. 2, Reference sign P2 represents power consumption values by the air conditioner for the living room, and Reference sign P3 represents power consumption values by LIVING. In the example of FIG. 3, the stop time t4 of the air conditioner for the living room is 23:30, the stop time t5 of LIVING is 23:40, and the stop time t6 of an electric load(s) in the bedroom is 24:10. The start time of "sleeping" Tx is 24:15. In the explanation below, the "electric load(s) in the bedroom" is(are) simply referred to as "BEDROOM"

Incidentally, knowledge has been obtained about a nearly similar procedure taken before user's specified behavior from analysis results of many pieces of power information. In other words, many users have their customs or habits of taking prescribed procedure before their specified behavior. A stop time obtained from power consumption values per branch circuit 22 reflects user's behavior according to the operation of a corresponding electric load(s) 24. Therefore, if it is possible to find out a user's custom or habit before "going out" or "sleeping" from stop times, the generator 15 can generate a model with the relation between specified behavior and stop times.

In the example of FIG. 2, there is a relation of t1 < t2 < t3 ≤ tx about the start time tx of "going out", the stop time t1 of the IH cooking heater, the stop time t2 of the air conditioner for the living room and the stop time t3 of LIVING. There are also relations of tx - t3 ≈ 5 minutes, tx - t2 ≈ 15 minutes and tx - t1 ≈ 115 minutes.

Similarly, in the example of FIG. 3, there is a relation of t4 < t5 < t6 ≤ ty about the start time ty of "sleeping", the stop time t4 of the air conditioner for the living room, the stop time t5 of LIVING and the stop time 66 of BEDROOM. There are also relations of ty - t6 ≈ 5 minutes, ty - t5 ≈ 35 minutes and ty - t4 ≈ 45 minutes.

As stated above, before specified behavior, regularity is found out from power consumption values by branch circuits 22 that fall to respective reference values and the occurrence orders of stop times at which the power consumption values falls to the respective reference values. When a stop time(s) per branch circuit 22 is(are) acquired a day, a relation with specified behavior for one day may be found out from a stop time of a single branch circuit 22 or the orders of stop times of branch circuits 22.

In the abovementioned example, before different behavior of "going out" and "sleeping", there is a common event in which power consumption values by the air conditioner for the living room and power consumption values by LIVING fall to the respective reference values. Moreover, in the example, since the stop time of the air conditioner for the living room is followed by the stop time of LIVING, "going out" and "sleeping" may not be distinguished even based on the occurrence orders of stop times of only two branch circuits 22.

Incidentally, power consumption values of all of the branch circuits 22 fall to respective reference values before "going out" or "sleeping". The total of power consumption values in the dwelling 20 therefore falls to the total of respective stand-by power consumption values of the plurality of branch circuits 22. A reference value (a second reference value) is accordingly set to the total of power consumption values in the dwelling 20 in addition to a reference value (a first reference value) per branch circuit 22. If the second reference value is set, a fall to the second reference value in the total of power consumption values in the dwelling 20 can be employed as a necessary condition of "going out" or "sleeping".

The determiner 14 therefore sets an extraction period T1 with a predetermined time length when detecting a point in time at which the total of power consumption values in the dwelling 20 falls to the second reference value (see FIGS. 2 and 3). The extraction period T1 is set to a point in time before a time of the extraction period T1 from a point in time at which the total of power consumption values in the dwelling 20 falls to the second reference value. The determiner 14 acquires a stope time per branch circuit 22 within the extraction period T1 based on the power information stored in the storage device 13. The extraction period T1 may be a constant time, but is desirably set so that a stop time can be acquired from each of three or more branch circuits 22. In the embodiment, a model corresponding to each of "going out" and "sleeping" contains conditions which include the occurrence orders of stop times acquired from three branch circuits 22. However, the orders of stop times obtained from four or more branch circuits 22 may be included in the conditions. In the embodiment, Table 1 shows a model of "going out" and Table 2 shows a model of "sleeping".

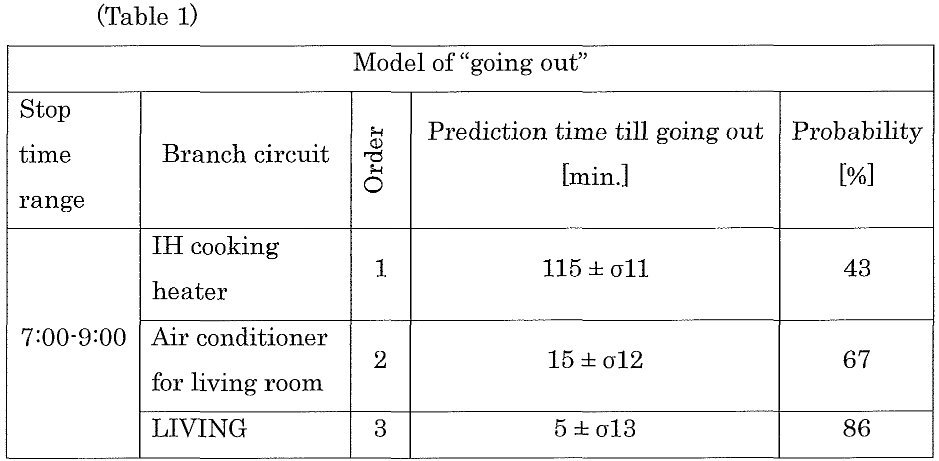

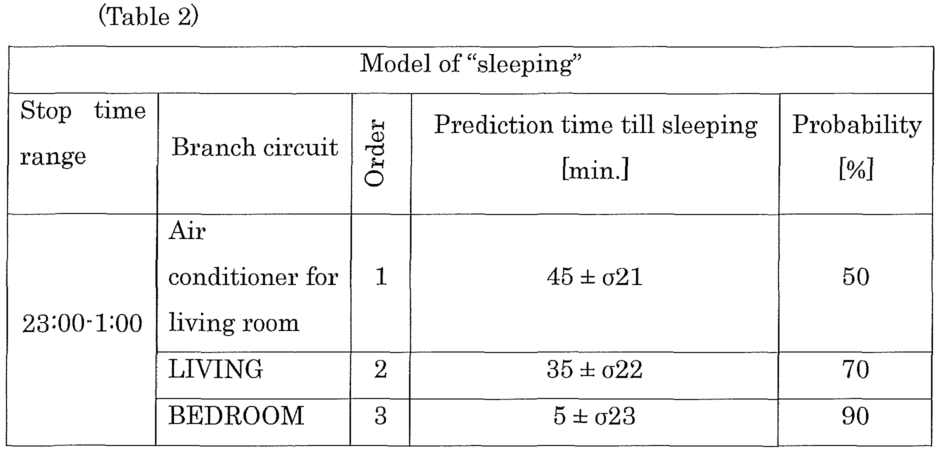

Each model includes four items of "stop time range", "branch circuit", "order" and "prediction time till going out" or "prediction time till sleeping". The "prediction time till going out" is a prediction value of a time from a stop time obtained from a corresponding branch circuit 22 to user's "going out". Desirably, the prediction time is statistically calculated based on a relation between many pieces of power information and the behavior. However, the prediction time may be set by specialist's experimental rule based on a relation between power information and the behavior. A model may be individually generated per user in principle. Different models may be generated by another condition such as by weekday or holiday or by season.

In Tables 1 and 2, each of σ11, σ12, σ13, σ21, σ22 and σ23 shows a tolerance of a corresponding prediction time. When a prediction time is statistically calculated based on many pieces of power information, the tolerance is set based on dispersion in prediction times. That is, the tolerance represents a dispersion degree of the prediction time. The tolerance therefore becomes smaller in general as the prediction time is shorter. That is, there is a relation of σ11 ≥ σ12 ≥ σ13 and a relation of σ21 ≥ σ22 ≥ σ23.

As stated above, when stop times are detected from branch circuits 22 that correspond a model, each prediction time from a corresponding stop time to specified behavior to be performed is predicted. It is considered that the precision of the prediction time would be higher as a time from the corresponding stop time to the specified behavior to be performed is shorter. In addition, in case a user takes a procedure according to the specified behavior before the behavior, the occurrence probability of the corresponding behavior is considered higher as the procedure draws to an end. Each probability in Tables 1 and 2 shows an occurrence probability of specified behavior when events occur in order.

In Table 1, when a stop time of the IH cooking heater is detected, "going out" can be predicted to be performed after (115 ± σ11) minutes from the stop time, and the probability of the prediction (reliability) is 43%. According to Table 1, when a stop time of the air conditioner for the living room is then detected, "going out" can be predicted to be performed after (115 ± σ12) minutes from the stop time, and the probability of the prediction is increased to 67%. In addition, according to Table 1, when a stop time of LIVING is detected after the stop time of the air conditioner for the living room is detected, "going out" can be predicted to be performed after (115 ± σ13) minutes from the stop time, and the probability of the prediction becomes 86%.

How to calculate each probability in Table 1 will be explained in brief. Each probability of prediction in Table 1 is calculated based on data as shown in Table 3. Table 3 shows an example in which a relation between "going out" and stop times for 14 days of each of three branch circuits 22 for the judgment of "going out" is obtained from the power information stored in the storage device 13. In Table 3, "IH" represents a branch circuit 22 to which the IH cooking heater is connected, "Air conditioner" represents a branch circuit 22 to which the air conditioner for the living room is connected, and "LIVING" shows a branch circuit 22 corresponding to LIVING. In each branch circuit 22, "True" means that a stop time was detected and "False" means that the stop time was not detected. In "going out", "True" means that a user went out and "False" means that the user was in home. In Table 3, each number in a first column is given in order to distinguish data and the orders thereof have no meaning.

**(Table 3)**

| | IH | Air conditioner | LIVING | Going out |
|---|---|---|---|---|
| 1 | True | True | True | True |
| 2 | True | True | True | True |
| 3 | True | True | True | True |
| 4 | True | True | True | True |
| 5 | True | True | True | True |
| 6 | True | True | True | True |
| 7 | True | True | True | False |
| 8 | True | True | False | False |
| 9 | True | True | False | False |
| 10 | True | False | False | False |
| 11 | True | False | False | False |
| 12 | True | False | False | False |
| 13 | True | False | False | False |
| 14 | True | False | False | False |

Table 3 shows whether or not "going out" is performed after a stop time of the IH cooking heater is detected. In this example, only when every stop time of the IH cooking heater, the air conditioner for the living room and LIVING is detected, "going out" will be performed. Even when the stop time of the IH cooking heater has been detected, if the stop time of LIVING is not detected, "going out" will not be performed.

Each probability is calculated based on Table 3, as follows. Fourteen days, in each of which a stop time of the IH cooking heater was detected, include six days in each of which "going out" was performed, and therefore the probability in this case is 6 / 14 ≈ 43%. Nine days, in each of which a stop time of the air conditioner for the living room was detected after the stop time of the IH cooking heater was detected, include six days in each of which "going out" was performed, and therefore the probability in this case is 6 / 9 ≈ 67%. Seven days, in each of which a stop time of LIVING was detected after a stop time of the IH cooking heater was detected and then a stop time of the air conditioner for the living room was detected, include six days in each of which "going out" was performed. In this case, the probability of "going out" is therefore 6/7 ≈ 86%. Thus, it is understood that the probability of prediction increases according to increased information for judging "going out".

Similarly, in Table 2, when a stop time of the air conditioner for the living room is detected, it is possible to predict that "sleeping" would be performed after (115 ± σ21) minutes from the stop time, and it is shown that the probability in this prediction is 50%. According to Table 2, when a stop time of LIVING is then detected, it is possible to predict that "sleeping" would be performed after (35 ± σ22) minutes from the stop time, and the probability in this prediction is 70%. In Table 2, when a stop time of BEDROOM is detected after the stop time of LICING is detected, it is possible to predict that "sleeping" would be performed after (115 ± σ23) minutes from the stop time, and the probability in this prediction increases to 90%.

As explained above, when regularity is found out between user's specified behavior and a stop time for each of branch circuits 22 before the behavior, models as shown in Tables 1 and 2 can be generated per kind of behavior. The generator 15 holds the generated models. The predictor 12 applies power consumption values acquired through the acquisition interface 11 from the measuring device 23 to the models, thereby predicting a kind of user's behavior and a time at which the behavior will occur. The predictor 12 compares a power consumption value acquired per branch circuit 22 through the acquisition interface 11 with a reference value, thereby acquiring a stop time per branch circuit 22. Here, the reference value used by the predictor 12 may be the same as a reference value defined by the determiner 14.

Incidentally, a "behavior time range" may be added to the conditions of the model. The "behavior time range" means a period of time in which the user's specified behavior is predicted to occur. Desirably, when predicting a time, at which the behavior will occur, from a stop time per branch circuit 22, the predictor 12 predicts a possibility of a corresponding behavior only when the predicted time is included in a period of time defined by the "behavior time range".

For example, it is desirable that in predicting "going out", when predicting a time of "going out" based on the conditions which include stop times detected from corresponding branch circuits 22, the predictor 12 employ the stop times for the prediction of "going out" if the predicted time is included in a period of time of 7:00 to 9:00. Desirably, even if stop times are detected from branch circuits 22 as an object of a model of "going out", the predictor 12 does not employ them for the prediction of "going out" when the predicted time is out of the period of time corresponding to the "behavior time range". Thus, by applying the "behavior time range" to the prediction of "going out", the prediction precision can be further increased.

When stop times acquired from all branch circuits 22 that are set as a model satisfy the conditions, the predictor 12 predicts that a user will perform behavior corresponding to the model after a prediction time elapses from a stop time acquired from a corresponding branch circuit 22. The time of the user's behavior is predicted based on a prediction time corresponding to a branch circuit 22 having a maximum probability in the model. In the model shown in Table 1, "going out" is predicted to be performed after (115 ± σ13) minutes from the stop time of LIVING.

Incidentally, power is not supplied to electric loads 24 other than required minimum electric loads 24 during "going out" and "sleeping" in general. That is, almost all the electric loads 24 require to be turned off before "going out" and "sleeping" so as not to be supplied with power during "going out" and "sleeping". It is therefore possible to improve user's convenience by cautioning the user that the electric loads 24 are not completely turned off before "going out" and "sleeping". It is desirable that when "going out" and "sleeping", the user be cautioned that not only the electric loads 24 are not completely turned off but also a door is not locked, etc.

In order to give a caution like this, when the predictor 12 predicts a time at which specified behavior will occur, prescribed information may be presented through an output device 16. The output device 16 may previously store pieces of presentation information of which contents correspond to respective behavior, and supply an appropriate presentation device 30 with the stored presentation information about behavior which will occur at a time predicted in advance.

It is desirable that the presentation device 30 be an operation display device that integrally includes a display that is a flat panel display such as a liquid crystal display, and an operation device such as a touch panel or a push switch(es). This sort of presentation device 30 may be a dedicated device for the behavior prediction device 10, but a terminal device may be employed as the presentation device 30 if the output device 16 is provided with an interface 160 configured to communicate with the terminal device. If this sort of terminal device is a general-purpose terminal device selected from a personal computer, a smartphone, a tablet or the like, it is possible to transmit and receive information to and from the behavior prediction device 10 without the dedicated presentation device 30.

Incidentally, a tolerance is contained in a prediction time from a stop time acquired from a branch circuit 22 corresponding to a model to a time at which behavior will occur. In the example of Table 1, the prediction time from the stop time of LIVING to a time of "going out" is (5 - σ13) minutes in minimum and (5 + σ13) in maximum. When the maximum prediction time is selected, there is a possibility that "going out" will be performed before the presentation device 30 performs presentation.

Presentation information is desirably presented at a time before user's specified behavior occurs when cautioning that an electric load(s) is(are) left on, etc. by presenting desirable presentation information to be acknowledged to the user according to the user's specified behavior. It is therefore desirable that timing at which the output device 16 supplies the presentation information to the presentation device 30 be set to be a minimum in a range of the prediction time predicted through the predictor 12.

In case behavior corresponding to a model is performed immediately after a stop time acquired from a specified branch circuit 22, the minimum prediction time becomes zero minute with the tolerance ignored. In this case, the presentation device 30 performs presentation at a same time with the stop time acquired from the specified branch circuit 22.

In the abovementioned configuration example, the predictor 12 is configured to predict a time up to behavior corresponding a model when stop times have been acquired from all branch circuits 22 that define the conditions of the model. However, the predictor 12 may be configured to predict a time up to behavior when a probability of the prediction is greater than or equal to a prescribed threshold. For example, in the case of the model corresponding to "sleeping" shown in Table 2, when the threshold is set to 70%, the predictor 12 predicts a time up to "sleeping" without waiting the stop time of BEDROOM after the stop time of LIVING is acquired. In this case, when the model includes a condition with a higher probability, the predictor 12 may correct the prediction time.

In the abovementioned configuration example, the presentation device 30 presents information if a kind of specified behavior and a time at which the behavior will occur are predicted. In this case, the output device 16 may be configured to control another device according to the specified behavior. For example, the output device 16 may be configured to perform control for adjusting a light output and color for illumination, control for adjusting brightness and sound volume of a television set, and the like in order to create an appropriate sleep environment before a predicted time of "sleeping".

In the abovementioned configuration example, at least one branch circuit 22 that defines a condition of a model is set in advance. However, all branch circuits 22 for defining the conditions of a model may be automatically set by evaluating correlation between a stop time per branch circuit 22 and behavior. In this case, the branch circuits 22 that are set automatically may include an unnecessary branch circuit(s) 22 with respect to the conditions for predicting the behavior. There is a possibility that prediction precision becomes high even if a stop time is acquired from a branch circuit 22 with comparatively low correlation and it is included in the conditions.

It is therefore desirable that as shown in FIG.1 the behavior prediction device 10 include an input device 17 that allows addition and deletion of a branch circuit 22 that defines a condition of a model generated through the generator 15. The input device 17 has a function for connection with an input device 31. Desirably, the input device 31 is an operation display device that integrally includes a display and an operation device, like the presentation device 30.

The input device 31 may be a dedicated device for the behavior prediction device 10, but the input device 17 may be provided with an interface 170 configured to communicate with a terminal device. In this case, the terminal device can be employed as the input device 31. Desirably, the terminal device is a general-purpose terminal device selected from a personal computer, a smartphone, a tablet or the like. The presentation device 30 and the input device 31 may have common hardware. Thus, when the presentation device 30 and the input device 31 have common hardware, the functions of the presentation device 30 and the input device 31 may be realized by an application program to be executed by the terminal device.

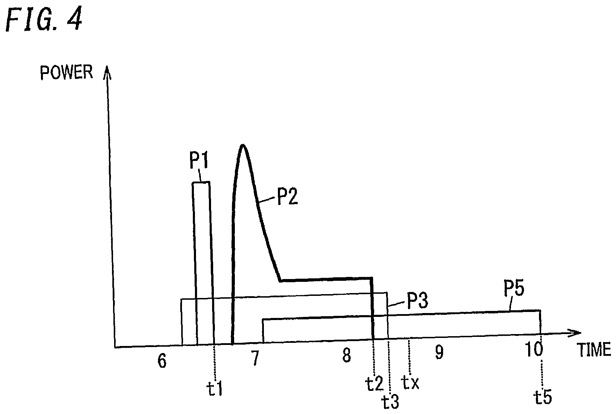

Hereinafter, a specific example for changing contents of a model through the input device 31 will be explained. In an example of FIG. 4, as power consumption values acquired from branch circuits 22 for prediction of "going out", a power consumption value P5 in a western-style room is selected besides a power consumption value P1 of the IH cooking heater, a power consumption value P2 of the air conditioner for the living room and a power consumption value P3 of LIVING. In the illustrated example, a stop time t1 of the IH cooking heater is 6:40, a stop time t2 of the air conditioner for the living room is 8:30, a stop time t3 of LIVING is 8:30 and a time tx of "going out" is 8:40. In addition, a stop time t5 acquired from the western-style room is 10:10.

In the operation of FIG. 4, an electric load 24 configured to operate according to a timer is present in the western-style room, and the electric load 24 continues operating until a time which is set to the timer elapses after "going out". When such an electric load 24 is included, even if a point in time at which a total of power consumption values in the dwelling 20 falls to a reference value (a second reference value) like the model shown in Table 1, the point in time is to pass through the time tx of "going out", and therefore cannot be used for the prediction of "going out" even if going back from the point in time at which the total of power consumption values in the dwelling 20 falls to the reference value.

Therefore, the power consumption value P5 in the western-style room is excluded from the model for predicting "going out" through the input device 31. In other words, it is possible to increase prediction precision of "going out" by deleting unnecessary information for prediction of specified behavior (the branch circuit 22) though the input device 31.

Incidentally, when models are generated from operations of FIGS. 2 and 3, each of the extraction periods T1 (see FIGS. 2 and 3) is set based on a point in time at which a total of power consumption values in the dwelling 20 falls to a second reference value. On the other hand, when a model is generated from the operation of FIG. 4, the power consumption value P5 in the western-style room is excluded and therefore a condition for setting an extraction period T1 is also changed. That is, the extraction period T1 is set based on a stop time, which is included in fall times of branch circuits 22 each of which a power consumption value falls to a corresponding reference value (first reference value) and is before the time tx of "going out", and which is nearest to the time tx of "going out". In short, a model for predicting a time tx of "going out" is defined based on the order of stop times before "going out".

In case the IH cooking heater is not necessarily used before "going out", the IH cooking heater is excluded from the model whereby the prediction precision of "going out" can be increased. On the other hand, when an electric load 24 is newly added, it is possible to predict behavior of "going out" precisely further based on a power consumption value by the newly added electric load 24. In this case, it is desirable that a branch circuit 22 for defining a condition of a model be added through the input device 31.

As stated above, since a branch circuit 22 for defining a condition of a model can be added or deleted through the input device 31, it is possible to improve prediction precision of user's specified behavior.

Incidentally, a time at which user's specified behavior ("going out" and "sleeping" in the above examples) occurs cannot be acquired from only the behavior prediction device 10. The time at which user's specified behavior occurs is therefore given to the behavior prediction device 10 by any of methods below. The time at which the specified behavior occurs is given through the input device 17.

That is, a time at which specified behavior occurs may be given to the behavior prediction device 10 at a point in time when the input device 31 connected to the input device 17 is operated. In this case, the input device 31 is provided with buttons corresponding to respective behavior, and the input device 17 is provided with a first interface (a first I/F) 171 configured to receive an input from each of the buttons to be pushed when respective user's specified behavior is performed. When a button of the input device 31 is pushed, the first interface 171 may store a kind of corresponding behavior in the storage device 13, and store date and time measured by the built-in clock 25 as a time of the behavior in the storage device 13. When the input device 31 is the operation display device, the buttons may be displayed on a screen thereof. In generating a model, the generator 15 may acquire a time that is set by operating the input device 31 as a time at which user's specified behavior occurs.

In case power information for generating a model is a small amount of information or in case there is comparatively large dispersion in times at which user's specified behavior occurs, it is desirable that timing of behavior be input to the behavior prediction device 10 as stated above. Thus, a user gives a point in time, at which user's specified behavior is performed, thereto whereby the time at which the specified behavior is performed can be precisely registered in the behavior prediction device 10.

As stated above, it is desirable that the behavior prediction device 10 include the first interface 171 configured to receive, as an input, an occurrence time of behavior to be given by a user. In this case, it is desirable that the generator 15 be configured to acquire a time received through the first interface 171 as the occurrence time of behavior when generating a model. The first interface 171 corresponds to an input information receiver of the present invention.

The input device 17 may include not the input device 31 but a second interface (a second I/F) 172 configured to receive information from a device 40 to be always operated when user's specified behavior occurs. The device 40 to be always operated when user's specified behavior occurs is, for example, a selector switch (a mode selection switch) for changing an operation mode between staying home and going out in the case of the dwelling 20 in which an electric lock to be locked in the case of "going out" and/or a security system are installed.

These devices 40 are usually operated in the case of going out. If information representing the operation is given to the second interface 172, the behavior prediction device 10 acquires a kind of behavior of going out and a time of the going out. Subsequent process is the same as that in the case a time of user's behavior is given through the input device 31. Even in the case of not limited to "going out" but "sleeping", information representing that a device 40 to be always operated before "sleeping" (e.g., a bedside lamp) is operated may be given to the behavior prediction device 10. In such a configuration without the input device 31, trouble can be saved because the operation of the input device 31 is not required.

As stated above, the behavior prediction device 10 may include the second interface 172 configured to receive information representing that the device 40 to be operated when behavior occurs is operated. In this case, it is desirable that the generator 15 be configured to acquire a time at which the second interface 172 receives the information as a time at which behavior occurs. The second interface 172 corresponds to an operation information receiver of the invention.

Incidentally, in case there are dwellers in the dwelling 20, dwellers' behavior may occur at different times. For example, all the dwellers do not necessarily perform "going out" at the same time. A configuration in which the dwellers perform the same kind of behavior at different times will be explained. In the explanation below, the number of dwellers in the dwelling 20 is two for the sake of simplicity, but may be three or more and in this case similar technology can be applied.

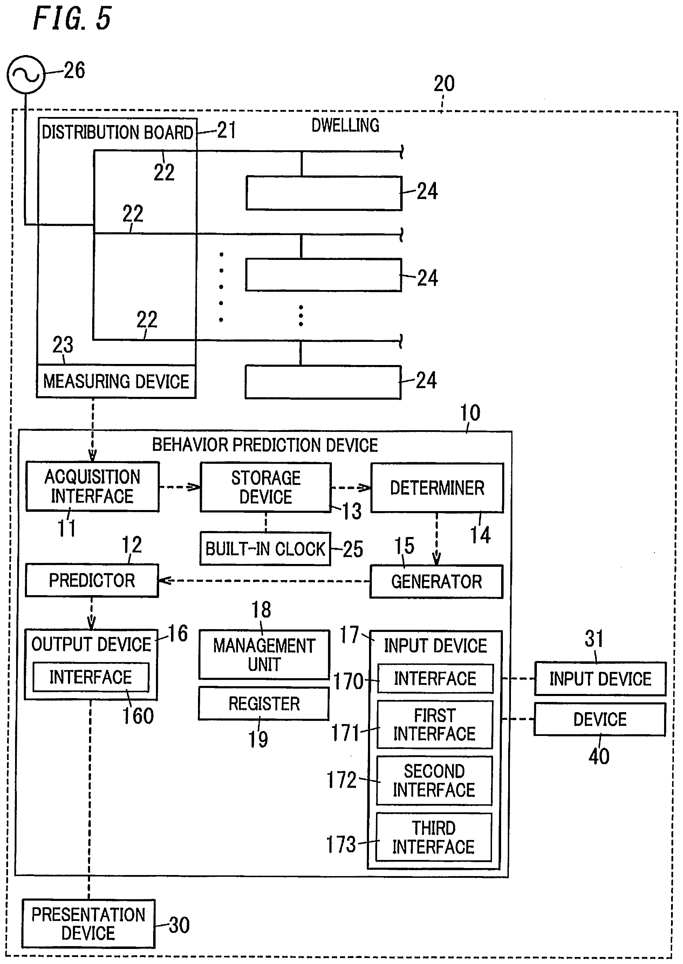

When predicting dwellers' behavior, the configuration of the behavior prediction device 10 varies according to whether or not individual identification is performed. A behavior prediction device 10 shown in FIG. 5 is configured to perform individual identification, but when the individual identification is not performed, a management unit 18 is removed. As stated above, in the embodiment, since the number of dwellers in the dwelling 20 is two, the behavior prediction device 10 is to distinguishably recognize two dwellers' behavior.

In FIG. 5, a determiner 14 is configured to provide a generator 15 with a stop time per branch circuit 22 acquired from power information. The generator 15 is configured to generate a model with a relation between the order of the stop times acquired from selected branch circuits 22 and conditions for predicting specified behavior. Since two dwellers' behavior needs to be identified, it is desirable that many kinds of information as the conditions of a model for predicting behavior be provided.

In the configuration example described above, stop times acquired from three branch circuits 22 correspond to behavior of one user, but in order to distinguish respective behavior of two or more users, stop times be acquired from four or more branch circuits 22. In this example, two dwellers' behavior is identified based on stop times acquired from five branch circuits 22 for an IH cooking heater, an air conditioner for a living room, LIVING, a western-style room and a bathroom (a toilet).

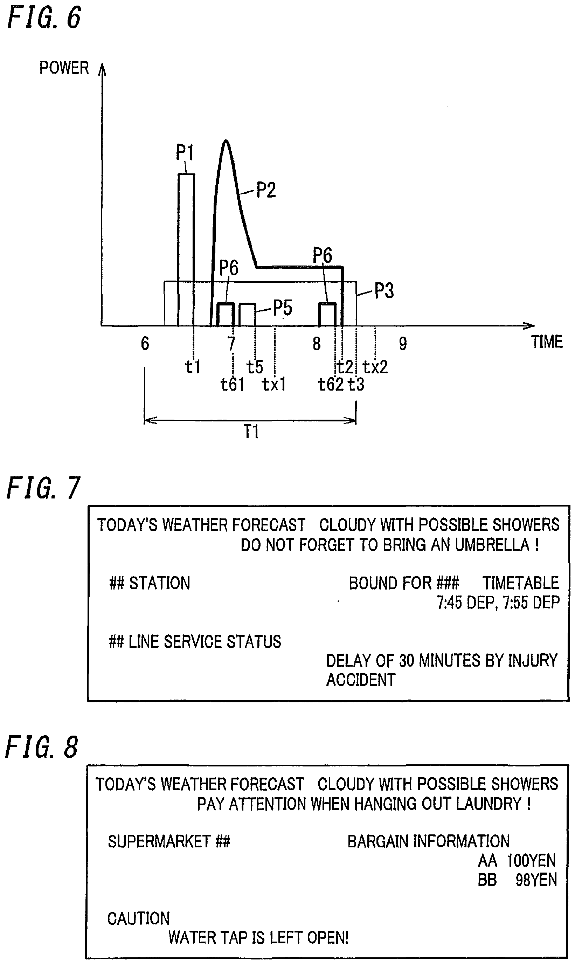

FIG. 6 shows variation in power consumption values of the selected five branch circuits 22 before two dwellers' "going out". In FIG. 6, Reference sign P1 represents a power consumption value by the IH cooking heater, Reference sign P2 represents a power consumption value by the air conditioner for the living room, and Reference sign P3 represents a power consumption value by LIVING. In addition, Reference sign P5 represents a power consumption value in the western-style room, and Reference sign P6 represents a power consumption value in the bathroom.

The determiner 14 is configured to set an extraction period T1 that goes back from a point in time at which a total of power consumption values in the dwelling 20 falls to a second reference value. In the illustrated example, each of times tx1 and tx2 of the two dwellers' "going out" needs to be predicted, and therefore the extraction period T1 is set to a comparatively long time in which stop times corresponding to the two dwellers' "going out" are contained. In the extraction period T1 of the example, two stop times t61 and t62 are detected from the branch circuit 22 for the bathroom, and stop times t1, t2, t3 and t5 are detected from other branch circuits 22 one each.

The generator 15 is configured to generate models as shown in Tables 4 and 5 based on stop times t1, t2, t3, t5, t61 and t62 acquired in the extraction period T1. Table 4 represents a model for first dweller's "going out", and Table 5 represents a model for second dweller's "going out". In Tables 4 and 5, each of σ31, σ32, σ33, σ41, σ42, σ43, σ44, σ45 and σ46 is a tolerance of a corresponding prediction time.

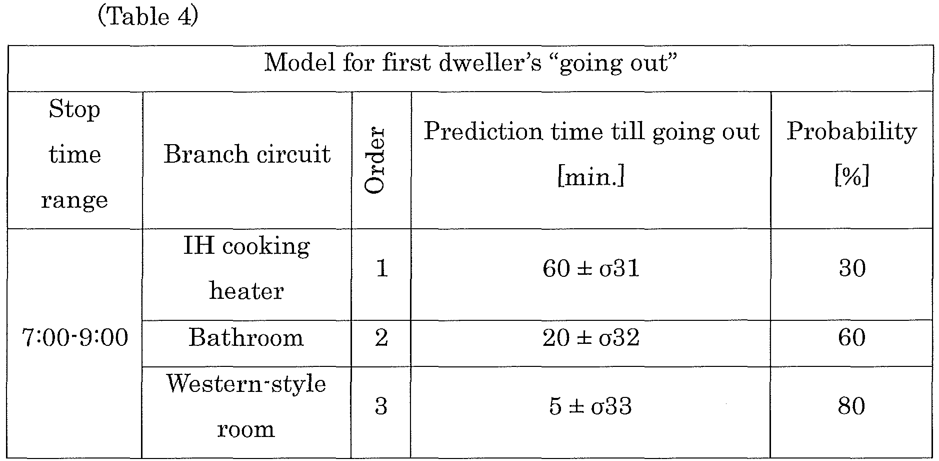

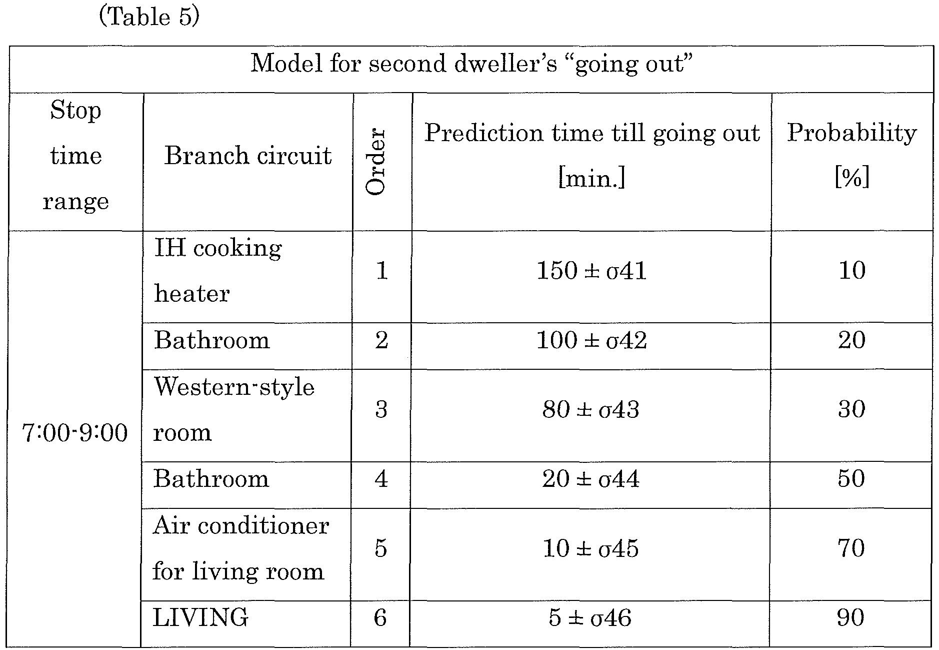

The model shown in Table 5 has six behavior conditions, and the three conditions shown by "order" of 1 to 3 correspond to the first dweller's behavior. Therefore, the conditions corresponding to the second dweller's behavior may be narrowed to three conditions shown by "order" of 4 to 6. That is, it is desirable that only three kinds of stop times t62, t2 and t3 be related to the second dweller's "going out" where t62 is a stop time acquired from the bathroom, t2 is a stop time acquired from the air conditioner for the living room, and t3 is a stop time acquired from LIVING.

In short, branch circuit 22 for a model can be selected by evaluating correlation between stop times acquired in the extraction period T1 and behavior. A correlation degree between the stop times and the behavior is reflected by "probability" of the model. A criterion may therefore be applied to the example of Table 5 so that a branch circuit(s) 22, a probability of which is below 50%, may be omitted from the conditions, for example. The criterion may be applied to the models shown in Tables 1 and 4. For example, in the models shown in Tables 1 and 4, even if the conditions that are first in "order" are omitted, the models for predicting "going out" are available.

Incidentally, the configuration example shown in FIG. 5 includes the management unit 18 configured to manage information per dweller. In a model generated through the generator 15, a time up to behavior is related to each of the conditions defined by stop times, and therefore it is possible to predict a kind of behavior and a time of the behavior when the dwellers are not distinguished. On the other hand, even in the same behavior, the conditions of a model depend on each dweller. Therefore, if a model is related to each of the dwellers, the management unit 18 can predict a dweller corresponding to behavior at a point in time when the predictor 12 predicts, based on the model, a kind of the behavior and a time at which the behavior will occur.

The dwellers to be predicted about the behavior have been registered in the management unit 18 through input device 17 in advance. In a configuration in which a kind of behavior and a time of the behavior are allowed to be registered in the storage device 13 according to the operation of input device 31, the operation of the input device 31 can be related to a dweller. That is, it is desirable that not only a kind of behavior but also a dweller to perform the behavior be registered through the input device 31. In this configuration, a kind of behavior and a time of the behavior stored in the storage device 13 are related to a dweller registered in the management unit 18.

After the generator 15 generates a model, the model is related to a dweller and then a relation between the model and the dweller is stored in the management unit 18. In short, the management unit 18 stores a relation that represents which of the dwellers is related with the model generated through the generator 15. The management unit 18 further stores attributes per dweller. Attributes per dweller do not need to include name and address but desirably include identification information of each dweller's terminal device (a mobile phone, a smartphone, a tablet, a personal computer or the like) to be notified of information, and a kind of notice required information. Identification information of each dweller's terminal device to be notified of information is selected from telephone number, mail address or the like.

Desirably, the notice required information includes information associated with each dweller's behavior besides information associated with the dwelling 20. For example, the information associated with the dwelling 20 represents that an appliance(s) (an electric load(s) 24 or the like) is(are) left on, or that a door is left open. In case a habit of daily driving a dishwasher is known from power consumption values in the past, before "sleeping" the presentation device 30 may present information representing that the dishwasher has not yet driven.

In case the embodiment is configured to detect whether or not a specified appliance such as a washing machine is driven, information associated with the appliance may be contained in the information associated with the dwelling 20. For example, when it is detected that the washing machine is driven based on power consumption values acquired from a corresponding branch circuit 22 before "going out", the information representing whether or not laundry should be dried outside is notified. Information associated with each dweller's behavior may contain information acquired through a telecommunications network such as the Internet from a website.

In order to acquire such information, the input device 17 desirably includes a third interface (a third I/F) 173. The third interface 173 is allowed to be connected to the telecommunications network such as the Internet and configured to acquire information associated with an appliance(s) in the dwelling 20. The behavior prediction device 10 further includes a register 19 that allows a kind(s) of (respective) behavior and an information source(s) to be registered in. The third interface 173 is configured, after the predictor 12 predicts a kind of behavior, to acquire information associated with the behavior from a corresponding information source registered in the register 19.

For example, an information source that provides information about weather forecast, traffic conditions, shop or restaurant discount, or the like is registered in the register 19 with respect to the behavior of "going out". In addition, an information source that provides information about opening or closing state of a window(s), operating state of an appliance such as a washing machine or the like is registered in the register 19 with respect to the information associated with the dwelling 20. A kind(s) of (respective) behavior and an information source(s) for acquiring information through the third interface 173 are registered in the register 19 in advance. A kind of necessary information is related to each dweller's behavior registered in the register 19.

Therefore, when the predictor 12 predicts a kind of each dweller's specified behavior and a time of the behavior, the output device 16 checks a kind of necessary information by referring the management unit 18, and also acquires a corresponding information source by referring the register 19. The third interface 173 acquires the required information from the information source to supply the information to the output device 16. As a result, a presentation device 30 of each dweller can present information corresponding to the behavior thereof.

Thus, in case there are users in an object space, it is desirable that the behavior prediction device 10 include the management unit 18. The management unit 18 is configured to store a model for each of the users, a kind of information to be presented through a presentation device 30 for each of the users, and identification information of a presentation device 30 registered for each of the users. In this case, desirably the output device 16 presents a user corresponding to a model used for the prediction of a kind of behavior by the predictor 12 with a kind of information stored in the management unit 18 through a presentation device 30 stored in management unit 18. The third interface 173 corresponds to a retrieval unit.

It is also desirable that the behavior prediction device 10 include the register 19 and the third interface 173. The register 19 is configured, in order to acquire information associated with a kind of behavior, to allow a kind of the behavior and an information source of the information to be registered in. The third interface 173 is configured, after the predictor 12 predicts a kind of behavior, to acquire information associated with the behavior from a corresponding information source registered in the register 19. In this case, desirably the output device 16 is configured to allow the presentation device 30 to present the information acquired through the third interface 173. The third interface 173 is desirably configured to acquire information via a telecommunications network.

The register 19 and the third interface 173 may be provided in not only the configuration for two or more dwellers such as the behavior prediction device 10 shown in FIG. 5 but also the behavior prediction device 10 shown in FIG. 1.

In the configuration examples, the generator 15 generates a model based on only power information, but may generate a model containing consumption information of at least one of gas and water used in the dwelling 20. In this case, the model contains at least one of gas and water used therein in addition to power consumption values. The model containing information about gas or water is similar to the model containing information about only the electric loads 24 in principle. The acquisition interface 11 acquires consumption from at least one of the gas and water, and therefore it is possible to allow the presentation device 30 to present information about used gas or water. For example, when a water tap is left open before "going out", it is possible to allow the presentation device 30 to present a message of giving a caution.

Table 6 shows examples of information to be presented through the presentation device 30 before "going out". Table 7 shows examples of information to be presented through the presentation device 30 before "sleeping".

**(Table 6)**

| PRESENTATION EXAMPLES WHEN "GOING OUT" IS PREDICTED |
|---|
| WEATHER FORECAST |
| RAILROAD SERVICE STATUS (DEPARTURE TIMES OF TRAINS, DELAY) |
| TRAFFIC INFORMATION (ACCIDENT, CONGESTION) |
| ELECTRIC LOAD IS LEFT ON |
| WINDOW IS LEFT OPEN |
| WATER TAP IS LEFT OPEN |
| BARGAIN INFORMATION ABOUT NEAREST SUPERMARKET |
| BELONGINGS LIST IN GOING OUT |
| SUGGESTION ABOUT BRINGING LAUNDRY IN (WHEN IT IS FORECAST THAT IT WOULD RAIN AND ACTIVATION OF WASHING MACHINE HAS BEEN DETECTED) |

**(Table 7)**

| PRESENTATION EXAMPLES WHEN "SLEEPING" IS PREDICTED |
|---|
| WEATHER FORECAST FOR TOMMAROW |
| PLAN FOR TOMORROW |
| FRONT DOOR IS LEFT OPEN |
| WINDOW IS LEFT OPEN |
| ELECTRIC LOAD IS LEFT ON |
| DISHWASHER IS LEFT DISABLE (WHEN IT HAS NOT YET BEEN DRIVEN IN CASE IT IS DRIVEN ONCE A DAY) |

FIGS. 7 and 8 show presentation examples of different information to two dwellers in the dwelling 20 through their terminal devices (presentation devices 30). As shown in FIG. 7, a dweller receives information presentation for suggesting bringing an umbrella according to the weather forecast before "going out", and information for presenting a departure time and the service status (delay or accident) of a train corresponding to a time of "going out". As shown in FIG. 8, another dweller receives information presentation for giving a caution for laundry according to the weather forecast before "going out", and bargain information about specified shop(s) and about water tap being left open.

Each component exclusive of the above components of the behavior prediction device 10 shown in FIG. 5 operates like that of the behavior prediction device 10 shown in FIG. 1. Therefore, in FIG. 5, like kind components assigned the same reference numerals as depicted in the behavior prediction device 10 of FIG. 1 are not explained.

The abovementioned behavior prediction device 10 may be installed per dwelling 20. In case a HEMS controller is installed in a dwelling 20, the behavior prediction device 10 may be realized by a server configured to communicate via a telecommunications network such as the Internet. In case the server functions as the behavior prediction device 10, the behavior prediction device 10 may acquire power consumption values from the measuring device 23 through the telecommunications network from the HEMS controller. That is, the server may collect power consumption values per branch circuit in the dwellings 20 to generate a model per dwelling 20.

With the configuration, abundant hardware resources of the server can be used for the storage device 13, the determiner 14, the generator 15 and the like. As a result, the dwelling 20 may be provided with only the HEMS controller configured to acquire power information from the measuring device 23 to supply the power information to the server, whereby it is possible for a user to suppress initial cost for the behavior prediction device 10. The presentation device 30 for presenting information from the behavior prediction device 10 and the input device 31 for giving an instruction to the behavior prediction device 10 may be realized by a general-purpose terminal device. In this case, the terminal device may function as the presentation device 30 and the input device 31 by executing an application program. The application program may be provided via the telecommunications network such as the Internet. The application program may also be provided by a computer-readable storage medium.

The abovementioned embodiments are just examples of the invention. The present invention is therefore not limited to the embodiments but various modifications according to design or the like even other than the embodiments may be made therein without departing from the true scope of the present invention.

In the embodiments, each stop time acquired through the predictor 12 corresponds to the first stop time of the invention. Each stop time contained in a model, namely each stop time acquired through the determiner 14 corresponds to the second stop time of the invention.

As explained above, a model used for a behavior prediction device 10 in an embodiment contains conditions which include a stop time acquired from at least one branch circuit 22, and is set so as to predict a kind of behavior and a time at which the behavior will occur. A predictor 12 is configured to apply a stop time acquired from power information to the model, thereby predicting a kind of behavior and a time at which the behavior will occur. The behavior prediction device 10 therefore has an advantage of predicting user's behavior in advance based on a power consumption value measured per branch circuit 22.

A program in an embodiment allows a computer to function as a behavior prediction device as described above. The program is stored in a computer readable storage device. The computer may execute the program stored in the storage device. Alternatively, the program stored in the storage device is installed on the computer, and then the computer may execute the installed program. Alternatively, the program may be provided via a telecommunications network such as the Internet.

With the program, it is possible to predict user's behavior in advance based on a power consumption value measured per branch circuit.

## Claims

1. A behavior prediction device, comprising:
an acquisition interface configured to acquire a power consumption value for each of a plurality of branch circuits which are divided inside a distribution board in an object space and each of which allows an electric load to be connected to; and
a predictor configured to acquire a first stop time based on power information in which the power consumption value is related with date and time at which the power consumption value is acquired, the first stop time being a time at which the power consumption value will fall to a predetermined reference value, the predictor being also configured, based on the first stop time, to predict a kind of specified behavior of a user in the object space and a time at which the behavior will occur, wherein
the predictor is configured to apply the first stop time to a model, thereby predicting the kind of behavior and the time at which the behavior will occur, the first stop time being acquired from the power information on at least one branch circuit used for conditions of the mode, the model containing the conditions which include a second stop time acquired from at least one branch circuit of the plurality of branch circuits, and being set so as to predict the kind of behavior and the time at which the behavior will occur.

2. The behavior prediction device of claim 1, wherein the conditions of the model include order of the second stop time in each of two or more branch circuits selected from the plurality of branch circuits.

3. A behavior prediction device of claim 1 or 2, further comprising:
a storage device configured to store the power information;
a determiner configured to acquire the second stop time per branch circuit from the power information stored in the storage device; and
a model generator configured to evaluate presence of regularity between the behavior of the user and the second stop time acquired through the determiner and generate the model when the regularity is detected, the conditions of the model including the second stop time acquired from a corresponding branch circuit, and being set so as to find out the kind of behavior and the time at which the behavior will occur.

4. The behavior prediction device of claim 3, further comprising an input device configured to receive an input for designating a branch circuit to be included in the conditions of the model.

5. A behavior prediction device of claim 3 or 4, wherein the reference value is set based on stand-by power consumption worked out per branch circuit based on the power information stored in the storage device.

6. A behavior prediction device of any one of claims 3 to 5, further comprising an input information receiver configured to receive an input as the time at which the behavior will occur, wherein
the model generator is configured, when generating the model, to acquire the time received with the input information receiver as the time at which the behavior will occur.

7. A behavior prediction device of any one of claims 3 to 5, further comprising an operation information receiver configured to receive information representing that a device to be operated by the user when the behavior occurs is operated, wherein
the model generator is configured, when generating the model, to acquire the time at which the operation information receiver receives the information as the time at which the behavior will occur.

8. A behavior prediction device of any one of claims 1 to 7, further comprising an output device configured to allow a presentation device to present information associated with the behavior according to the kind of behavior and the time at which the behavior will occur, predicted through the predictor.

9. The behavior prediction device of claim 8, further comprising a management unit configured, in case a number of users in the object space is two or more, to store a model per user, a kind of information to be presented through a presentation device per user, and identification information of a presentation device per presentation device, wherein
the output device is configured to present a user corresponding to a model used for prediction of the kind of behavior by the predictor with the kind of information stored in the management unit through the presentation device stored in management unit.

10. A behavior prediction device of claim 8 or 9, further comprising:
a register configured to allow the kind of behavior and an information source of information associated with the kind of behavior to be registered in; and
a retrieval unit configured, when the predictor predicts the kind of behavior, to acquire the information associated with the behavior from the information source registered in the register, wherein
the output device is configured to allow the presentation device to present the information acquired through the retrieval unit.

11. The behavior prediction device of claim 10, wherein the retrieval unit is configured to acquire the information via a telecommunications network.

12. A behavior prediction device of any one of claims 1 to 11, wherein the conditions of the model include consumption information on consumption of at least one of gas and water used in the object space.

13. A program, for allowing a computer to function as a behavior prediction device of any one of claims 1 to 12.
